# EUROPEAN PATENT APPLICATION

(11) **EP 2 538 634 A1**
(43) Date of publication of application: **26.12.2012**
(21) Application number: 10844954.7
(22) Date of filing: 06.09.2010
(51) Int. Cl.: H04L 29/08, H04L 12/58, G06F 17/30

(54) **METHOD FOR REALIZING PEER-TO-PEER (P2P) COMMUNICATION ON WEBPAGE**

(30) Priority: 02.07.2010 CN 201010223600
(71) Applicant: Suzhou Codyy Network Science &Technology Co., Ltd., Jiangsu 215021 (CN)
(72) Inventor: HU, Jiaming, Suzhou, Jiangsu 215021 (CN)
(74) Representative: Isarpatent
(86) International application number: PCT/CN2010/076641
(87) International publication number: WO 2012/000226

(57) **Abstract**

The present invention relates to the field of network technology, specifically to a method for achieving P2P communication on webpage. The method includes the steps of: 1) accessing a webpage by a user, calling an interface of a flash to connect with a socket server, connecting with a stratus server to acquire a key and monitoring received messages by the flash; 2) sending a username and the key of a source user to the socket server by the flash and storing the username and the key of the source user by the socket server; 3) acquiring the key of the target user from the socket server and sending a message out via the netconnection and the key of the target user by the flash on the webpage of the source user; 4) displaying the message on the webpage of the target user after the flash of the webpage of the target user receives the message. The method can implement p2p communication on webpage, establish connection among the users directly, reduce the pressure on the bandwidth of the server, thereby enhancing communication efficiency and network utilization.

## Description

### Field of the Invention

The present invention relates to the field of network technology, specifically to a method for achieving P2P communication on webpage.

### Background of the invention

The Internet has dramatically improved our jobs and life styles. Unlike the traditional informative communication ways, the interconnectivity, openness and information sharing mode of the Internet are making us acquire rich information more conveniently than even. The Internet allows us communicate instantly, chat with good friends and negotiate with partners online without physically meeting up. At present, the commonly used instant communication tools, such as MSN, QQ and POPO from NetEase, require download and installation in a local computer. The tools offer a convenient mechanism for users to communicate and exchange information almost instantly. The instant communication tools become another important way to exchange information exchange besides mobile phones, desktop phones and e-mails.

With the help of the instant communication tools, the communication cost between users can be greatly reduced while the communication efficiency is gracefully enhanced. However, in order to use an instant communication tool, the corresponding client software must be downloaded and installed in a computing device. This could be a complex configuration and tedious procedure, which is a relatively difficult for users who have never used these tools and do not have much background about computers.

In addition, the current instant communication tools required to be downloaded are getting bigger and bigger in size. For example, the QQ201 0 software has reached 32.6MB and the MSN software has reached 11.2MB. Therefore a large memory space of an installing computer must be occupied. Meanwhile, the problem of network security resulting from the downloading could bother some users as well. Furthermore, all the data being exchanged (e.g. chat logs, etc.) are stored in a computer terminal. A user would fail to retrieve the original data once the computer is replaced (e.g., going on a business trip with another computer, etc.) or the software is reinstalled, thus further causing more inconvenience.

A present network terminal these days has extended to a mobile phone, thereby the requirement for instantaneity of the instant communication and a storage space for the tools becomes much high. Hence there is a need for solutions that require no software to be downloaded and installed in a device, instant communication can be accomplished upon opening a webpage, and all the data being exchanged can be stored on or by the webpage safely.

Currently, there are some alternative communication ways based on a webpage, such as message board, forum and the like, but their common shortages include: poor instantaneity, failure of achieving webpage-based audio and video, and being far away from meeting the demand for instant communication.

At present, there is a network video technique sharing which can realize the webpage-based audio and video (e.g., fms or red5) but does not adopt the peer-to-peer (P2P) technology so as not to make use of bandwidth resources from the users, thereby bringing tremendous pressure to servers and the bandwidth of service providers, and raising the cost sharply as the number of users increases. Hence, this approach is disadvantageous to popularizing wide-range applications so that a company or a product having certain market scale has not emerged in webpage-based audio and video field yet.

Thus, there is a need to develop a method for achieving P2P communication on webpage.

### SUMMARY OF THE INVENTION

One object of the present invention is to provide a method for achieving P2P communication on webpage.

In order to achieve the above object, the present invention provides a method for achieving P2P communication on webpage including the following steps:
1) accessing a webpage by a user, calling an interface of a flash to connect with a socket server, connecting with a stratus server via a netconnection to acquire a key, establishing a connection netconnection and monitoring received messages by the flash, wherein the netconnection being a variable name;
2) sending a username and the key of a source user to the socket server by the flash and storing the username and the key of the source user by the socket server;
3) calling the interface of the flash to send a message including a username of a target user to the socket server by Javascript codes on the webpage of the source user, receiving the message sent by the source user and returning the key corresponding to the username of the target user to the flash on the webpage of the source user by the socket server, and sending a message out via the netconnection and the key of the target user by the flash on the webpage of the source user; and
4) calling a javascript interface on the webpage of the target user to display the message on the webpage of the target user after the flash of the webpage of the target user receives the message.

In the above method, the step 1) includes: 1a) after the user logs in the webpage, an account of the webpage visitor is recorded, the user visits the webpage, a webpage script calls the interface of the flash to visit the socket server, the socket server adds a socket monitor thread to the user after receiving a connection request from the flash, and a permanent connection is established between the monitor thread and the flash of the browser user; 1b) the flash on the webpage of the source user is connected with the stratus server via the netconnection classes, the stratus server returns a unique key to the flash on the webpage of the source user; and 1c) the flash on the webpage of the source user establishes the connection with the stratus server and starts monitoring the received messages.

In the above method, the step 2) includes: 2a) the flash on the webpage of the source user sends the username and the key of the source user acquired from the stratus server to the socket server; and 2b) the socket server saves the username and the key of the source user.

In the above method, the step 3) includes: 3a) the javascript codes on the webpage of the source user call the flash interface and send the message including the username of the target user to the socket server; and 3b) the socket server receives the message sent by the source user and returns the key corresponding to the target user to the flash on the webpage of the source user.

In the above method, the steps 4) includes: 4a) the flash on the webpage of the source user sends the message out via the netconnection and the key of the target user; and 4b) the javascript interface on the webpage of the target user is called to display the message on the webpage of the target user after the flash of the target user receives the message.

Because of application of the above technical solution, the present invention has the following advantages relative to the prior art:
1) the user can achieve instant communication without downloading any software, thereby saving the memory space of the computer, reducing plenty of inconveniences and simultaneously enhancing the security of the network environment;
2) the present invention has superior instantaneity and no lag in instant communication, and is quite suitable for the application of network audios and videos;
3) the present invention is suitable for any network terminal including personal computer; and
4) the present invention can dramatically reduce the pressure on the server and the bandwidth.

### BRIEF DESCRIPTION OF THE DRAWINGS

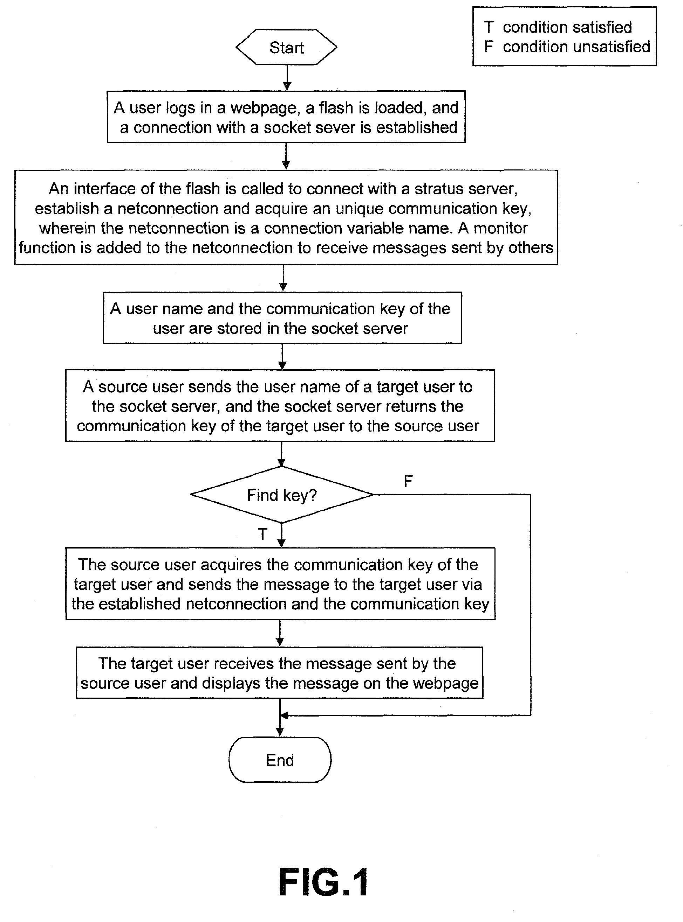

FIG.1 is a detailed flowchart according to one embodiment of the present invention.

### DETAILED DESCRIPTION OF THE INVENTION

The present invention will be further described according to accompanying drawings and embodiments hereafter.

According to one embodiment of the present invention, a method for achieving P2P communication on webpage includes the following steps:
1) A user accesses a webpage, and an interface of a flash is called to connect with a socket server. The flash is connected with a stratus server via a netconnection to acquire a key, establishes a connection netconnection and monitors received messages with the netconnection, wherein the netconnection is a variable name.
2) The flash sends a username and the key of a source user to the socket server, and the socket server stores the username and the key of a source user.
3) Javascript codes on the webpage of the source user call the interface of the flash to send a message including a username of a target user to the socket server. The socket server receives the message sent by the source user and returns the key corresponding to the username of the target user to the flash on the webpage of the source user. The flash on the webpage of the source user sends a message out via the netconnection and the key of the target user.
4) The flash of the webpage of the target user calls a javascript interface on the webpage of the target user to display the message on the webpage of the target user after the flash of the webpage of the target user receives the message.

The method of the prevent invention is further described in detail hereafter:

Referring to FIG. 1, a source user inputs own personal webpage address in a browser or reaches the personal webpage through links. The source user inputs an account and a password to log in the own personal webpage, the account is regarded as a communication account if the log-in succeeds, and the system allocates a temporary communication account to the source user if not log-in. A client script calls an interface of a flash to establish a connection with the socket server. The flash is connected with the stratus server via a netconnection to acquire a key, establishes a connection netconnection and begins monitoring received messages, wherein the netconnection is a variable name. Meanwhile, the flash sends the username and the key of the source user to the socket server, and the socket server stores the username and the key of the source user. Javascript codes on the webpage of the source user call the interface of the flash to send the username of the target user to the socket server. The socket server receives the message sent by the source user and returns the key corresponding to the username of the target user to the flash on the webpage of the source user. The javascript on the webpage of the source user sends the message to the flash by calling the interface of the flash, and the flash sends the message to the flash on the webpage of the target user via the netconnection and the key of the target user. An interface of the javascript is called to display the message after the flash on the webpage of the target user receives the message.

## Claims

1. A method for achieving P2P communication on a webpage, the method comprising the steps of:
1) accessing a webpage by a user, calling an interface of a flash plug-in to connect with a socket server, connecting with a stratus server via a netconnection to acquire a key, establishing a connection netconnection and monitoring received messages by the flash, wherein the netconnection being a variable name;
2) sending a username and the key of a source user to the socket server by the flash and storing the username and the key of the source user by the socket server;
3) calling the interface of the flash to send a message including a username of a target user to the socket server by Javascript codes on the webpage of the source user, receiving the message sent by the source user and returning the key corresponding to the username of the target user to the flash on the webpage of the source user by the socket server, and sending a message out via the netconnection and the key of the target user by the flash on the webpage of the source user; and
4) calling a javascript interface on the webpage of the target user to display the message on the webpage of the target user after a flash of the webpage of the target user receives the message.

2. The method for achieving P2P communication on webpage according to claim 1, wherein the step 1) comprises the steps of:
1a) accessing a webpage by a user, calling an interface of a flash plug-in to connect with a socket server; and
1b) connecting with a stratus server via a netconnection to acquire a key, establishing a connection netconnection and monitoring received messages by the flash, wherein the netconnection being a variable name.

3. The method for achieving P2P communication on webpage according to claim 1, wherein the step 3) comprises:
3a) calling the interface of the flash to send a message including a username of a target user to the socket server by Javascript codes on the webpage of the source user;
3b) receiving the message sent by the source user and returning the key corresponding to the username of the target user to the flash on the webpage of the source user by the socket server; and
3c) sending a message out via the netconnection and the key of the target user by the flash on the webpage of the source user.

4. The method for achieving P2P communication on webpage according to claim 1, wherein the user is connected with the stratus server to acquire the key for communication, and the flashes on the webpage of the users establish a connection via the key.
